(19) Europäisches Patentamt
European Patent Office
Office européen des brevets

(11) Numéro de publication: **0 104 970**
**B1**

# (12) FASCICULE DE BREVET EUROPEEN

(45) Date de publication du fascicule du brevet: **06.08.86**

(51) Int. Cl.⁴: **C 08 F 8/32**, C 08 F 8/34

(21) Numéro de dépôt: **83401677.6**

(22) Date de dépôt: **18.08.83**

(54) **Perfectionnements à la préparation de polymères à fonctions hydroxamiques, nouveaux polymères obtenus et leurs applications.**

(30) Priorité: **28.09.82 FR 8216317**

(43) Date de publication de la demande:
**04.04.84 Bulletin 84/14**

(45) Mention de la délivrance du brevet:
**06.08.86 Bulletin 86/32**

(84) Etats contractants désignés:
**DE GB IT NL**

(56) Documents cités:
**FR - A - 2 392 040**
**FR - A - 2 476 113**
**US - A - 3 345 344**

(73) Titulaire: **SOCIETE NATIONALE ELF AQUITAINE, Tour Aquitaine, F-92400 Courbevoie (FR)**

(72) Inventeur: **Vio, Lino, 73 Avenue Copernic, F-64000 Pau (FR)**
Inventeur: **Meunier, Gilles, Bourg de Mazerolles Mazerolles, F-64230 Lescar (FR)**

(74) Mandataire: **Kohn, Armand, 5 Avenue Foch, F-92380 Garches (FR)**

EP 0 104 970 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne des perfectionnements à la préparation de polymères à fonctions hydroxamiques, nouveaux polymères obtenus et leurs applications. Elle permet l'obtention de tels polymères porteurs d'un nombre voulu de groupes hydroxamiques, sans formation appréciable de produits secondaires gênants; elle rend possible, en outre, la préparation de dérivés, dans lesquels la chaîne du polymère ou/et les groupes hydroxamiques contiennent différents substituants.

Des polymères possédant des fonctions hydroxamiques sont connus comme échangeurs d'ions et chélatants utiles notamment à la complexation de fer. Une première méthode de leur préparation, décrite dans l'USP 3345344, consiste à traiter par de l'HCl concentré une polyamidoxime obtenue elle-même par l'action d'un sel d'hydroxylamine sur un polyacrylonitrile. La présence résiduelle de groupes nitrile et amidoxime et, d'autre part, la nécessité d'une opération avec de l'acide concentré, constituent des sujétions de cette méthode. Selon la publication du brevet français 2476113, des polymères hydroxamiques sont préparés par chauffage à 90 °C d'une solution aqueuse de polyacrylamide additionnée de chlorhydrate d'hydroxylamine et d'acétate de sodium. Ce procédé permet l'obtention de polymères porteurs de groupes hydroxamiques, qui exercent un effet très favorable sur les boues de forage, notamment de puits de pétrole. Cette application de grande importance industrielle justifiait des recherches en vue de perfectionner le procédé susindiqué de brevet français.

Tel était, en effet, le but des études qui ont conduit à la présente invention. Celle-ci réside, en premier lieu, dans l'utilisation de températures nettement plus basses que celle qui était appliquée selon le brevet français précité. Bien qu'en règle générale, la vitesse d'une réaction croisse avec la température, on assiste, dans le cas présent, à ce résultat surprenant que le remplacement des groupes amido par des fonctions hydroxamiques se fait mieux à des températures modérées qu'à 90 °C ou au-dessus. On constate, en effet, qu'au-delà de 85 °C, et surtout à 90 °C et au-dessus, la décomposition de l'hydroxylamine devient très rapide, ce qui fait que l'opération se traduit par une perte de ce réactif lorsqu'on travaille à de telles températures.

Conformément à l'invention, la réaction d'un sel d'hydroxylamine avec du polyacrylamide, a lieu à des températures allant de 50 °C à 85 °C et, de préférence, entre 60 °C et 80 °C. Aux températures voisines de 60 °C, la réaction est assez lente mais donne d'excellents résultats lorsqu'on ne cherche qu'à remplacer un faible pourcentage de groupes amido par des groupes hydroxamiques; c'est le cas notamment lorsqu'il s'agit du remplacement d'environ 5 à 20% des groupes amido; la durée de la réaction est alors de l'ordre de quelques heures à 20 heures. Pour des taux d'hydroxamination plus grands, il est bon de travailler surtout à des températures de 65 à 85 °C, en particulier au voisinage de 70 °C; on peut alors remplacer avec un excellent rendement plus de 25% de fonctions amido sans perte importante d'hydroxylamine.

Suivant un trait spécial de l'invention, on élimine du milieu réactionnel l'ammoniac formé pendant le chauffage; cela rend stable le polymère hydroxamique, et permet de l'utiliser à l'état de solution telle qu'obtenue par la réaction sans séparation ni purification préalable.

L'élimination de $NH_3$ peut être réalisée par exemple par l'application du vide ou par soufflage d'un gaz inerte à travers la solution. Un moyen fort avantageux consiste à élever la température, à la fin de la préparation, au dessus de 85 °C, notamment à 85 à 100 °C, juste pour le temps nécessaire au dégazage de l'ammoniac présent. Le chauffage à 85–100 °C permet également d'éliminer les restes d'hydroxylamine toxique. La présence d'$NH_3$ et d'hydroxylamine, tous deux produits toxiques, rendrait impraticable la manipulation du produit sur un chantier. Pour éviter la décomposition, ce temps ne doit pas dépasser 2 h, et il est généralement d'environ 15 à 75 min.

On réalise ainsi, par un trait particulier de l'invention, un procédé combiné, qui consiste à chauffer d'abord le milieu réactionnel pendant plusieurs heures à une température de 50 à 80 °C et d'achever ensuite le travail par un chauffage bref, de moins de 2 h, à une température de 85 à 100 °C.

Suivant un autre trait de l'invention, pour une température donnée, le taux de substitution de groupes hydroxamiques aux groupes amido peut être modifié par le réglage adéquat de la proportion molaire d'hydroxylamine par rapport au polyacrylamide utilisé. En général, ce rapport varie entre 0,2 et 1,2 moles de sel d'hydroxylamine par groupe amide présent. L'inférieure de ces limites correspond au cas où on cherche à fixer seulement une faible quantité de groupes hydroxamiques, tandis que la limite de 1,2 est un excès d'hydroxylamine, tandis que la limite de 1,2 est un excès d'hydroxylamine de 20% par rapport à la stoechiométrie, nécessaire lorsqu'on veut pousser loin le remplacement des groupes amido par des groupes hydroxamiques. Le rapport 1 représente les proportions théoriques de la réaction:

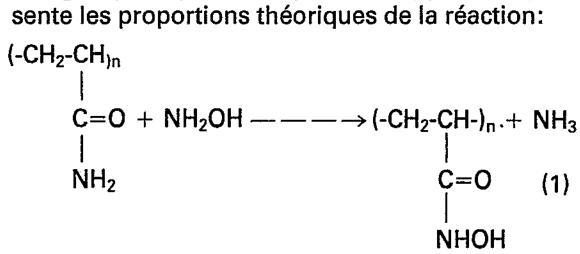

(1)

Cette réaction (1) est écrit abstraction faite de l'acide auquel en réalité est combinée l'hydroxylamine utilisée.

Etant donné que des copolymères acrylamide-acide acrylo hydroxamiques, renfermant seulement environ 10 à 60% de groupe hydroxamique donnent d'excellents résultats dans certaines applications, et en particulier comme additifs des boues de forage, il n'est pas nécessaire de pousser le procédé suivant la présente invention jusqu'au remplacement de la totalité de groupes amides par des groupes hydroxamiques; il suffit pratiquement que ce remplacement soit de l'odre d'environ 10 à 60%. Il n'est donc pas nécessaire d'employer un excès d'hydroxylamine dans la réaction (1): il suffit le plus souvent que le rapport susindiqué hydroxylamine/amide, compris entre 0,2 et 1,2, soit de l'ordre de 0,35 à 0,65 et plus particulièrement de 0,4 à 0,6.

Comme dans l'art antérieur, la réaction suivant l'invention est conduite en milieu aqueux, le polyacrylamide étant employé de préférence à une concentration de 50 à 500 g/l ou mieux de 150 à 350 g/l, ces dernières concentrations correspondant à environ 2 à 5 unités acrylamide ($CH_2$-CH-$CONH_2$) par litre.

Différents sels d'hydroxylamine peuvent être employés, par exemple sulfate, sulfite, phosphate, perchlorate, chlorhydrate, acétate, propionate ou autres, le chlorhydate étant le produit commercialement le plus accessible. Selon la nature du sel utilisé, et par conséquent selon le pH qu'il donne en milieu aqueux, il est important – conformément à l'invention – d'ajuster le pH de la solution réactionnelle à une valeur d'environ 5 à 7½ et de préférence 6 à 7. Des valeurs de pH de 6,2 à 6,8 sont particulièrement favorables. Cet ajustement peut être effectué par les moyens bien connus dans l'art, par exemple par l'adjonction d'une quantité appropriée d'une base, notamment soude, potasse, chaux, baryte, ammoniaque ou autres. Dans ces conditions de pH la réaction de l'hydroxylamine sur un amide est favorisée, grâce à la cinétique rapide de la réaction.

Suivant un autre trait de l'invention, on augmente, dans toute la mesure possible, la force ionique de la solution aqueuse, qui constitue le milieu réactionnel. Pour cela l'emploi d'un sel d'hydroxylamine, tel que chlorhydrate ou sulfate, avec adjonction de soude ou de potasse pour ajuster le pH, est très favorable, parce que le sel minéral formé augmente la constante de vitesse de la réaction. Mais comme la concentration en électrolyte fort, ainsi créée, n'est généralement que de l'odre de 1 à 3 moles/l, il est avantageux, suivant l'invention d'ajouter au milieu réactionnel encore environ 1 à 10 moles d'électrolyte fort par litre. Cet électrolyte peut être un sel tel que chlorure de sodium, potassium, ammonium, calcium, un sulfate de Na, K ou $NH_4$, etc.

L'invention apporte également un perfectionnement supplémentaire, permettant une économie d'hydroxylamine en évitant l'oxydation à l'air de ce réactif. Pour cela, la réaction est effectuée de préférence dans une atmosphère exempte d'oxygène, notamment sous une atmosphère d'azote, de $CO_2$ ou d'un autre gaz inerte vis-à-vis de l'hydroxylamine.

Le procédé, perfectionné comme il vient d'être décrit, devient applicable à différentes hydroxylamines substituées, ainsi qu'à différents copolymères de l'acrylamide ou du méthacrylamide. Ainsi devient-il possible d'obtenir toute une gamme de polymères et copolymères porteurs de groupes hydroxamiques

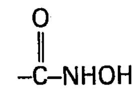

dont 1 ou les 2 atomes H sont substitués par des radicaux hydrocarbonés, aliphatiques ou aryliques, éventuellement substitués eux-mêmes; ces radicaux sont des alkyles ou hydroxyalkyles, des aryles ou des alkaryles; les alkyles sont les plus souvent en $C_1$ à $C_{18}$ et les aryles et alkaryles dérivent du benzène ou du naphtalène. Un ou les deux H peuvent également être substitués par des cycloalkyles, en particulier cyclopentyles et cyclohexyles. Le substituant de l'un de ces H peut être identique ou différent de celui de l'autre H.

De tels groupes hydroxamiques sont obtenus par le procédé décrit plus haut, dans lequel l'hydroxylamine employée porte précisément les substituants concernés. Des hydroxylamines substituées sont connues dans l'art, on peut donc utiliser, pour la réaction avec le polyacrylamide, une hydroxylamine R-NH-OR' dans laquelle R et/ou R' sont des radicaux énumérés plus haut, un des R ou R' pouvant être un atome d'hydrogène.

Ce qui vient d'être dit au sujet des produits hydroxamiques substitués est également valable pour les thiocomposés correspondants, c'est-à-dire pour

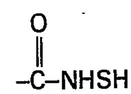

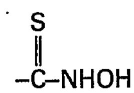

ou

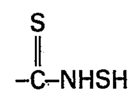

qui s'obtiennent à partir de thiohydroxylamine ou/et à partir de polythioacrylamide, par exemple suivant les schémas:

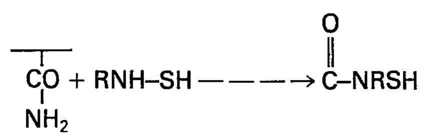

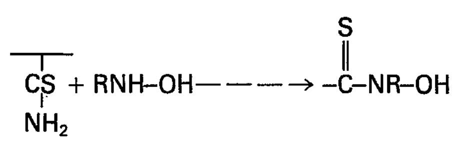

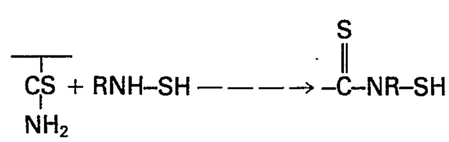

Les différents copolymères de l'acrylamide ou de méthacrylamide, qui peuvent être utilisés pour la préparation suivant l'invention, peuvent être choisis parmi les différents copolymères connus, dans lesquels les éléments amidiques sont copolymérisés avec d'autres dérivés acryliques ou

méthacryliques, tels qu'acides, esters, sels, par exemple acide acrylique, acrylate, de méthyle, acrylate de sodium, etc.; les motifs copolymérisés peuvent être ceux de l'anhydride maléique, d'acétate de vinyle, de vinyl pyrrolidone ou éventuellement du butadiène, du styrène ou de l'acrylonitrile. Un ou plusieurs atomes d'oxygène peuvent être remplacés par des atomes de soufre dans les polymères utilisés: ainsi peut-on employer des polymères de thioacrylamide, de thioacrylate d'alkyle, thioacrylate alcalin, etc.

Des motifs d'acrylamide portant des substituants sur l'azote conviennent également à la préparation des produits suivant l'invention. Tel est le cas des alkyles en $C_1$ à $C_{12}$, éventuellement hydroxylés, substitués à 1 ou aux 2 atomes H de la fonction amide; un exemple en est le copolymère acrylamide-méthylol acrylamide ou autre alkanolacrylamide.

Bien que des polymères de masses molaires très diverses, par exemple de 500 à 100000, puissent être traités suivant l'invention, des résultats particulièrement bons sont obtenus avec des masses molaires plustôt faibles. Ainsi, contrairement à la technique connue, où des polyacrylamides de masse molaire 20000 étaient employés, le trait préféré de l'invention consiste à soumettre à l'action de l'hydroxylamine un polymère dont la masse moléculaire ne dépasse pas 20000. Les masses préférées sont de 1000 à 20000 ou mieux de 1200 à 6000.

Dans les exemples non limitatifs qui suivent, on désigne par l'expression «taux hx» le taux % de remplacement des groupes fonctionnels du polymère de départ par les groupes hydroxamiques; autrement dit, lorsque le polymère traité est un homopolymère de l'acrylamide ou de méthacrylamide, le taux hx représente le % des fonctions amide $-CONH_2$ initiales, remplacées par les fonctions d'acide hydroxamique -CO-NHOH. Si un copolymère d'acrylamide ou de méthacrylamide avec un autre monomère, porteur de fonctions ou groupes actifs F, est employé, le taux hx % s'entend par rapport au total des fonctions ou groupes initiaux F+amide.

Le mode opératoire général de production d'un polymère hydroxamique suivant l'invention comprenait la préparation d'un kg de solution aqueuse ou d'émulsion de polyacrylamide ou d'un copolymère d'acrylamide. Dans cette colution ou émulsion on dissolvait d'abord la quantité voulue de chlorhydrate d'hydroxylamine éventuellement substituée. La solution obtenue était partiellement neutralisée par addition lente, sous agitation vigoureuse, d'une solution de potasse aqueuse à 36%, de façon à éviter la saponification locale de l'amide par KOH. Le pH du mélange était ainsi amené à la valeur voulue, généralement entre 6 et 7. Suivait alors un chauffage de plusieurs heures avec agitation sous atmosphère d'azote. Sur des parties aliquotes du milieu réactionnel obtenu on déterminait le taux hx %.

Dans certains cas, le polymère hydroxamique était précipité par l'addition d'éthanol à la solution après chauffage; il était séché et analysé.

Plusieurs des produits obtenus ont été essayés comme additifs de boues de forage.

Les résultats numériques se trouvent dans les exemples ci-après.

Exemples 1 à 7

Le polyacrylamide, dont 1 kg de solution aqueuse à 24% en poids est employé, présente une masse moléculaire Mw de 1500. Le poids de chlorhydrate d'hydroxylamine mis en jeu est de 117,5 g et celui de KOH, utilisée pour la neutralisation partielle, de 74,2 g.

Il en résulte que le milieu réactionnel contient:

| | |
|---|---|
| 3,38 motifs | $(CH_2\text{-}CH\text{-}CONH_2)$ de monomère |
| 1,32 moles | $NH_2OH$ |
| 0,37 moles | $NH_2OH.HCl$ |
| 1,32 moles | KCl |

Le rapport molaire $(NH_2OH+NH_2OH.HCl):(CH_2\text{-}CH\text{-}CONH_2)=0,5$ et celui de KOH/hydroxylamine totale = 0,783, ce qui procure un pH de 6,4.

| Exemple n° | 1 | 2 | 3 | 4 | 5 | 6 | 7 |
|---|---|---|---|---|---|---|---|
| T°C du chauffage principal | 65° | 65° | 70° | 70° | 80° | 80° | 90° |
| Durée en heures du chauffage principal | $10^h$ | $10^h$ | $6^h$ | $6^h$ | $6^h$ | $6^h$ | $6^h$ |
| Durée en heures du chauffage final à 90° | – | $1^h$ | – | $1^h$ | – | $1^h$ | – |
| Taux hx% du produit obtenu | 28 | 26 | 34 | 34 | 33 | 32 | 30 |

On voit que, d'une façon inattendue, bien que le chauffage à seulement 90°, pendant 6 h, conduise à un résultat faible, l'achèvement à 90° en 1 h des opérations menées tout d'abord entre 65 et 80° n'apporte rien de supplémentaire, mais chasse l'excès d'$NH_3$ et d'hydroxylamine, toxiques. L'analyse montre d'ailleurs qu'après 6 h à 90° des pertes d'hydroxylamine par décomposition ont lieu, tandis que 1 h de chauffage à cette température ne produit pratiquement aucune perte.

Exemples 8 à 15

Dans les conditions générales des exemples précédents, on a effectué une série de préparations avec différents copolymères à la place de l'homopolyacrylamide.

Au tableau ci-après, le terme co-motif indique le monomère copolymérisé avec l'acrylamide, et son rapport à celui-ci.

| Ex n° | Co-motif | Sa masse mol. Mw | Chauffage | Taux hx % |
|---|---|---|---|---|
| 8 | Thioacrylate d'éthyle 30/70 | 5000 | $6^h$ à 70 °C | 21 |
| 9 | Méthylol-acrylamide 20/80 | 2000 | $6^h$ à 70 °C $+1^h$ à 90 °C | 30 |
| 10 | Anhydride maléique 10/90 | 1500 | $6^h$ à 70 °C $+1^h$ à 90 °C | 40 |

| Ex n° | Co-motif | Sa masse mol. Mw | Chauffage | Taux hx % |
|---|---|---|---|---|
| 11 | Acrylate de sodium 30/70 | 3000 | $6^h$ à 70 °C $+1^h$ à 90 °C | 28 |
| 12 | Méthylacryl-amide 50/50 | 3000 | $6^h$ à 70 °C $+1^h$ à 90 °C | 33 |
| 13 | Acrylonitrile 30/70 | 4000 | $6^h$ à 70 °C $+1^h$ à 90 °C | 36 |
| 14 | Acrylate de méthyle 25/75 | 2500 | $6^h$ à 70 °C $+1^h$ à 90 °C | 31 |
| 15 | Méthacrylate d'éthyle | 2800 | $6^h$ à 70 °C $+1^h$ à 90 °C | 27 |

Il en résulte que certains copolymères (exemples 9 et 10) conduisent à des produits plus riches en groupes hydroxamiques que ne le fait l'homopolyacrylamide.

Exemples 16 à 24

Le polymère de départ est encore le polyacrylamide comme dans les exemples 1 à 7, tandis que le chlorhydrate d'hydroxylamine est remplacé par des chlorhydrates de différentes hydroxylamines substituées. Les proportions molaires des réactifs sont les mêmes que dans les exemples 1 à 7, et le chauffage est effectué à 70 °C durant 6 heures et ensuite à 85 °C pendant 2 h.

| Ex. n° | Hydroxylamine substituée | Taux hx % |
|---|---|---|
| 16 | $NH_2OCH_3$ | 30 |
| 17 | $NH_2OC_4H_9$ | 32 |
| 18 | $NH_2OC_6H_5$ | 28 |
| 19 | $CH_3$-NHOH | 31 |
| 20 | $C_3H_7$-NHOH | 29 |
| 21 | $C_6H_{13}$-NHOH | 35 |
| 22 | $CH_3NH$-$OCH_3$ | 29 |
| 23 | $C_6H_5NH$-OH | 26 |
| 24 | $C_6H_5NH$-$OCH_3$ | 19 |

Exemple 25

Le mode opératoire général étant le même que dans les exemples 1 à 7, on l'applique à une solution aqueuse à 20% en poids de polyméthacrylamide de masse molaire 3000.

Le rapport mol. KOH/hydroxylamine est 0,81; le pH de la solution voisin de 6,6.

On chauffe pendant 8 h à 70 °C, puis 1 h à 90 °C. Le taux hx est de 23%.

Exemples 26

Le copolymère acrylamide 70/thioacrylate d'éthyle 30 de l'exemple 8 est employé, dans les conditions de ce dernier, conjointement avec du chlorhydrate de O-méthyl-N-phényl hydroxylamine.

La masse moléculaire du copolymère est 5000.

On obtient un taux hx de 15% en 6 h à 70 °C.

Exemple 27

Préparation en émulsion.

Le polyacrylamide de masse moléculaire MW=4000 est pris sous la forme de 1 kg d'émulsion à 30% de ce polymère, 35% de kérosène et 35% d'eau, obtenue en présence de octyl phénol éthoxylé en tant que tensio-actif non ionique. Les proportions d'hydroxylamine et de potasse sont les mêmes qu'aux exemples 1 à 7, soit en valeurs absolues 146,8 g de $NH_2OH.HCl$ et 92,8 g KOH. Après 6 h de chauffage à 70 °C le taux hx est de 20%, le milieu réactionnel restant à l'état d'émulsion.

Exemple 28

Les opérations de l'exemple 4, c'est-à-dire chauffage de 6 h à 70 °C achevé en 1 h à 90 °C, sont répétées avec cette seule différence que, dans la solution de polyacrylamide, on dissout 1,678 moles NaCl, soit 98,1 g de ce sel. Ainsi, compte tenu du KCl formé par la neutralisation du chlorhydrate d'hydroxylamine, le milieu réactionnel contient 3 moles d'électrolyte fort. Le taux hx s'élève à 37%, ce qui montre l'accélération de la réaction sous l'effet de la force ionique de la solution.

Exemple 29

Le polyacrylamide de l'exemple 4 est remplacé par la même quantité de polyacrylamide de masse moléculaire 13500.

Le taux hx est alors de 32%.

Une préparation similaire, mais effectuée à 65 °C en 6 h, sans chauffage final à 90 °C, conduit à un taux hx de 15%.

Exemple 30

Certains des produits, obtenus selon des exemples qui précèdent, ont été essayés comme additifs d'une boue de forage de puits de pétrole. La boue se composait de: 100 g d'eau renfermant 10 g d'additif dissous au préalable, 200 g d'argile de charge, 50 g de bentonite $FB_2$ (Clarsol $FB_2$) (marque de fabrique).

La viscosité en cp était mesurée sur la boue au moyen du viscosimètre FANN 35 à 600 tours/mn. Voici les viscosités trouvées à 20 °C avec différents additifs.

| Ex. n° | Additif | Viscosité, cp |
|---|---|---|
| 30 | Aucun (témoin) | 27,5 |
| 31 | Polyacrylamide de masse mol. 1500 | 9,5 |
| 32 | Lignosulfonate de fer et chrome («Brixel» $NF_2$) | 19,0 |
| 33a | Produit de l'exemple 4 (hx=34%) | 8,5 |
| 33b | Produit de l'exemple 4 (hx=34%) purifié | 6,5 |
| 34a | Produit de chauffage plus court (hx=15%) | 13,0 |
| 34b | Produit de chauffage plus court (hx=15%) purifié | 11,0 |

| Ex. n° | Additif | Viscosité, cp |
|---|---|---|
| 35a | Produit de l'exemple 29 (polyacrylamide de masse mol. 13500; hx=17%) | 20,0 |
| 35b | Produit de l'exemple 29 (polyacrylamide de masse mol. 13500; hx=17%) purifié | 17,0 |
| 36a | Produit de l'exemple 29 (polyacrylamide de masse mol. 13500; hx=42%) | 21,0 |
| 36b | Produit de l'exemple 29 (polyacrylamide de masse mol. 13500; hx=42%) purifié | 11,5 |
| 37 | Produit de l'exemple 11 (hx=28%) | 7,0 |
| 38 | Produit de l'exemple 9 (hx=55%) | 6,0 |

Les exemples 33a et b montrent un effet remarquable des groupes hydroxamiques, lorsque ceux-ci sont suffisamment nombreux (taux hx=34%). L'effet est encore bon, mais non supérieur à celui du polyacrylamide, lorsque le taux hx descend à 15%, comme l'indiquent les exemples 34a et b. D'excellents résultats sont obtenus avec des produits préparés à partir des copolymères acrylamide-acrylate de Na (exemple 37) préparés suivant l'exemple 11. De la comparaison entre exemples 33a, b et 34a, b avec 35a, b et 36a, b, il résulte que les produits de faible masse moléculaire (1500) sont beaucoup plus efficaces que ceux dont Mw dépasse 10000 (13500).

Exemples 39 à 41

Des mesures similaires à celles des exemples 30–38 sont effectuées à 25 °C sur des boues ayant été chauffées préalablement durant 2 jours respectivement à 160 °C et à 200 °C. La teneur des boues en additif est de 5 g/l.

| Ex. n° | | Viscosités à 25 °C en cp Initiale | après chauffage à 160 °C | 200 °C |
|---|---|---|---|---|
| 39 | Témoin | 27,5 | 42 | 57 |
| 40 | Polyacrylamide 1500 | 9,5 | 21 | 30,5 |
| 41 | Produit type ex.4 (taux hx 24%) | 8,0 | 10,2 | 14 |

Il est remarquable qu'en présence d'un polymère hydroxamique (ex. 41) la viscosité, fortement abaissée au départ, n'augmente que peu du fait du chauffage.

**Revendications**

1. Procédé pour la préparation de polymère à fonctions hydroxamiques, par chauffage d'une solution aqueuse de polyacrylamide avec un sel d'hydroxylamine, caractérisé en ce que la réaction est réalisée à une température de 50 à 85 °C, pendant plusieurs heures et de préférence entre 60 et 80 °C.

2. Procédé suivant la revendication 1, caractérisé en ce que l'ammoniac et l'hydroxylamine restants sont éliminés du milieu réactionnel après le chauffage, en particulier par un second chauffage, ne dépassant pas 2 heures, entre 85 et 100 °C.

3. Procédé suivant la revendication 2, caractérisé en ce que le deuxième chauffage dure 15 à 75 mn.

4. Procédé suivant une des revendications 1 à 3, caractérisé en ce que le taux de remplacement des groupes amido par des groupes hydroxamiques est réglé par l'utilisation d'une proportion de sel d'hydroxylamine de 0,2 à 1,2 et en particulier 0,35 à 0,65 mol par groupe amide présent dans le polyacrylamide employé.

5. Procédé suivant une des revendications précédentes, dans lequel le pH de la solution aqueuse est compris entre 5 et 7,5, caractérisé en ce que ce pH est ajusté à une valeur de 6,2 à 6,8.

6. Procédé suivant une des revendications précédentes, caractérisé en ce qu'une partie des motifs acrylamide, dans le polyacrylamide, sont remplacés par des motifs provenant d'autres monomères copolymérisables avec l'acrylamide, en particulier acide, ester ou sel acrylique ou méthacrylique, anhydride maléique, ester de vinyle, vinyl pyrrolidone, butadiène, styrène, acrylonitrile ou alkanolacrylamide.

7. Procédé suivant une des revendications 1 à 5, caractérisé en ce qu'une partie des motifs acrylamide du polymère employé sont remplacés par des motifs de thiocomposés, notamment thioacrylates, thiométhacrylates ou/et thioacrylamide.

8. Procédé suivant une des revendications précédentes, caractérisé en ce que la masse molaire du polymère soumis à l'action du sel d'hydroxylamine présente une masse moléculaire de 1000 à 20000 et de préférence de 1200 à 6000.

9. Procédé suivant une des revendications précédentes, caractérisé en ce que le sel d'hydroxylamine, en particulier chlorhydrate ou sulfate, est celui d'une hydroxylamine substituée R-NH-OR', dans laquelle R et/ou R' sont des substituants organiques, un des R ou R' pouvant être un atome d'hydrogène.

10. Procédé suivant une des revendications précédentes, caractérisé en ce que le sel d'hydroxylamine est celui de thiohydroxylamine.

11. Polymère ou copolymère acrylique ou/et méthacrylique portant des fonctions hydroxamiques et des groupes amido, caractérisé en ce que sa masse moléculaire est de 1000 à 20000.

12. Polymère ou copolymère suivant la revendication 11, caractérisé en ce que sa teneur en fonctions hydroxamiques est d'environ 10 à 60% du total des groupes actifs présents.

13. Polymère ou copolymère suivant la revendication 11 ou 12, caractérisé en ce qu'il contient des motifs autres qu'acryliques ou/et méthacryliques, les groupes hydroxamiques pouvant porter des substituants organiques ou/et un atome de soufre à la place de l'un ou des deux atomes d'oxygène.

14. Application d'un polymère renfermant des fonctions hydroxamiques en tant qu'additif des boues de forage du sol, caractérisée en ce que ce polymère ou copolymère est choisi parmi ceux que définissent les revendications 11 à 13.

**Patentansprüche**

1. Verfahren zur Herstellung eines Polymeren mit Hydroxamsäurefunktionen durch Erwärmen einer wässrigen Lösung von Polyacrylamid mit einem Hydroxylaminsalz, dadurch gekennzeichnet, dass die Reaktion bei einer Temperatur von 50 bis 85 °C während mehrerer Stunden, und vorzugsweise von 60 bis 80 °C, durchgeführt wird.

2. Verfahren nach Anspruch 1, dadurch gekennzeichnet, dass verbleibendes Ammoniak und Hydroxylamin aus dem Reaktionsmedium nach dem Erwärmen, insbesondere durch ein zweites Erwärmen, das 2 h nicht überschreitet, bei 85 bis 100 °C, entfernt werden.

3. Verfahren nach Anspruch 1, dadurch gekennzeichnet, dass das zweite Erwärmen 15 bis 75 min dauert.

4. Verfahren nach einem der Ansprüche 1 bis 3, dadurch gekennzeichnet, dass der Grad des Ersatzes der Amidogruppen durch Hydroxamsäuregruppen gesteuert wird durch Verwendung eines Anteils des Hydroxylaminsalzes von 0,2 bis 1,2 und insbesondere 0,35 bis 0,65 Mol pro Amidgruppe, die in dem verwendeten Polyacrylamid vorhanden ist.

5. Verfahren nach einem der vorhergehenden Ansprüche, bei dem der pH-Wert der wässrigen Lösung 5 bis 7,5 beträgt, dadurch gekennzeichnet, dass das pH auf einen Wert von 6,2 bis 6,8 eingestellt wird.

6. Verfahren nach einem der vorhergehenden Ansprüche, dadurch gekennzeichnet, dass ein Teil der Acrylamidgruppen in dem Polyacrylamid durch Gruppen ersetzt wird, die von anderen mit dem Acrylamid copolymerisierbaren Monomeren stammen, insbesondere Acrylsäure oder Methacrylsäure, Ester oder Salze derselben, Maleinsäureanhydrid, Vinylester, Vinylpyrrolidon, Butadien, Styrol, Acrylnitril oder Alkanolacrylamid.

7. Verfahren nach einem der Ansprüche 1 bis 5, dadurch gekennzeichnet, dass ein Teil der Acrylamidgruppen des verwendeten Polymeren durch Gruppen von Thioverbindungen ersetzt ist, insbesondere Thioacrylate, Thiomethacrylate oder/und Thioacrylamid.

8. Verfahren nach einem der vorhergehenden Ansprüche, dadurch gekennzeichnet, dass das Molekulargewicht des der Einwirkung des Hydroxylaminsalzes unterworfenen Polymeren ein Molekulargewicht von 1000 bis 20000 und vorzugsweise von 1200 bis 6000 ist.

9. Verfahren nach einem der vorhergehenden Ansprüche, dadurch gekennzeichnet, dass das Hydroxylaminsalz, insbesondere das Hydrochlorid oder Sulfat, das eines substituierten Hydroxylamins R-NH-OR' ist, worin R oder/und R' organische Substituenten sind, wobei eines von R oder R' ein Wasserstoffatom sein kann.

10. Verfahren nach einem der vorhergehenden Ansprüche, dadurch gekennzeichnet, dass das Hydroxylaminsalz das von Thiohydroxylamin ist.

11. Acrylisches oder/und methacrylisches Polymeres oder Copolymeres, das Hydroxamsäurefunktionen und Amidogruppen trägt, dadurch gekennzeichnet, dass sein Molekulargewicht 1000 bis 20000 beträgt.

12. Polymeres oder Copolymeres nach Anspruch 11, dadurch gekennzeichnet, dass sein Gehalt an Hydroxamsäurefunktionen etwa 10 bis 60% der gesamten vorhandenen aktiven Gruppen beträgt.

13. Polymeres oder Copolymeres nach Anspruch 11 oder 12, dadurch gekennzeichnet, dass es andere Gruppen als acrylische oder/und methacrylische enthält, wobei die Hydroxamsäuregruppen organische Substituenten oder/und ein Schwefelatom anstelle eines oder der beiden Sauerstoffatome enthalten können.

14. Verwendung eines Polymeren mit Hydroxamsäurefunktionen als Zusatz zu Erdboden-Bohrschlämmen, dadurch gekennzeichnet, dass dieses Polymere oder Copolymere aus den gemäss den Ansprüchen 11 bis 13 definierten ausgewählt wird.

**Claims**

1. Process for the preparation of a polymer having hydroxamic functions, by heating an aqueous solution of polyacrylamide with a hydroxylamine salt, characterised in that the reaction is carried out at a temperature of 50 to 85 °C for several hours and preferably between 60 and 80 °C.

2. Process according to claim 1, characterised in that the remaining ammonia and hydroxylamine are eliminated from the reaction medium after the heating step, in particular by a second heating step not exceeding two hours between 85 and 100 °C.

3. Process according to claim 2, characterised in that the second heating step lasts 15 to 75 minutes.

4. Process according to any of claims 1 to 3, characterised in that the degree of replacement of amido groups by hydroxamid groups is regulated by the use of a proportion of the hydroxylamine salt of 0.2 to 1.2 and in particular from 0.35 to 0.65 mole per amide group present in the polyacrylamide employed.

5. Process according to any of the preceding claims, in which the pH of the aqueous solution is in the range from 5 to 7.5, characterised in that this pH is adjusted to a value from 6.2 to 6.8.

6. Process according to any of the preceding claims, characterised in that part of the acrylamide groups in the polyacrylamide are replaced by groups derived from other monomers copolymerisable with acrylamide, in particular an acrylic or methacrylic acid, ester or salt, maleic anhydride, vinyl ester, vinyl pyrrolidone, butadiene, styrene, acrylonitrile or alkanolacrylamide.

7. Process according to any of claims 1 to 5, characterised in that part of the acrylamide groups of the polymer employed are replaced by thiocompound groups, particularly thioacrylates, thiomethacrylates and/or thioacrylamide.

8. Process according to any of the preceding claims, characterised in that the molar weight of the polymer subjected to the action of the hydroxylamine salt has a molecular weight from 1,000 to 20,000 and preferably.

9. Process according to any of the preceding claims, characterised in that the hydroxylamine salt, in particular the hydrochloride or sulphate, is that of a substituted hydroxylamine, R-NH-OR', in which R and/or R' are organic substituents, where one of R and R' can be a hydrogen atom.

10. Process according to any of the preceding claims, characterised in that the hydroxylamine salt is that of thiohydroxylamine.

11. An acrylic and/or methacrylic polymer or copolymer carrying hydroxamic functions and amido groups, characterised in that its molecular weight is from 1,000 to 20,000.

12. A polymer or copolymer according to claim 11, characterised in that its content of hydroxamic functions is about 10 to 60% of the total active groups present.

13. Polymer or copolymer according to claim 11 or 12, characterised in that it contains other groups than acrylic and/or methacrylic, where the hydroxamic groups can carry organic substituents and/or a sulphur atom in place of the one or two oxygen atoms.

14. Use of a polymer containing hydroxamic functions as an additive to ground-drilling muds, characterised in that the polymer or copolymer is selected from those defined according to claims 11 to 13.